Europäisches Patentamt
(19) European Patent Office (11) Publication number: **0 060 723**
Office européen des brevets **B2**

(12) **NEW EUROPEAN PATENT SPECIFICATION**

(45) Date of publication of the new patent specification: (51) Int. Cl.⁴: **G 01 N 31/22**
15.11.89

(21) Application number: **82301346.1**

(22) Date of filing: **16.03.82**

| E R R A T U M |

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | | LAUTET BERICHTIGT:<br>SHOULD READ:<br>DEVRAIT ETRE LU : |
|---|---|---|---|---|
| characterised in, that, to | 2 | | 39 | characterised in that, to |
| ethylene oxide consisting only the substrate | 2 | | 39/40 | ethylene oxide, the substrate |
| not more than 12.2ml/cm2/mm/24 | 2 | | 43 | not more that 12.2ml/cm$^2$/mm/24 |
| inch$^2$mil/24h) at 25°c | 3 | | 4 | inch$^2$/mil/24h) at 25°c |
| material for the inner layers, | 3 | | 14 | material for the inner layer 5, |
| light blu → blu → dark blue | 3 | | 27 | light blue →  blue → dark blue |
| polycarbonate, ASS, polyacetal | 4 | | 18 | polycarbonate, ABS, polyacetal, |
| the second group and ASS | 4 | | 32 | the second group and ABS |
| von nicht mehr als 12,2ml/cm$^2$/ | 5 | | 37 | von nicht mehr als 12,2ml/cm$^2$/ |
| 24h bei 25°C | | | | mm/24h bei 25°C |

Tag der Entscheidung )
über die Berichtigung )
Date of decision on ) 10.5.90
rectification: )
.................
Date de décision portant )
sur modification: )

Ausgabe- und Ver- )
öffentlichungstag: )
Issue and publication ) 18.7.90
date: )
.................
Date d'edition et de )
publication: )

Patbl.Nr) 90/29
EPB no:) .........
Bull. no:)

Europäisches Patentamt

(19) European Patent Office

Office européen des brevets

(11) Publication number: **0 060 723**
**B2**

(12) **NEW EUROPEAN PATENT SPECIFICATION**

(45) Date of publication of the new patent specification:
15.11.89

(21) Application number: **82301346.1**

(22) Date of filing: **16.03.82**

(51) Int. Cl.⁴: **G 01 N 31/22**

(54) Indicator for detecting ethylene oxide.

(30) Priority: **17.03.81 JP 37318/81**

(43) Date of publication of application:
**22.09.82 Bulletin 82/38**

(45) Publication of the grant of the patent:
**10.07.85 Bulletin 85/28**

(45) Mention of the opposition decision:
**15.11.89 Bulletin 89/46**

(84) Designated Contracting States:
**DE FR GB IT SE**

(56) References cited:
**GB-A-854 142**
**GB-A-1 506 401**
**GB-A-1 523 227**
**US-A-2 998 306**
**US-A-3 627 469**
**US-A-3 992 154**
**US-A-4 094 642**
**US-A-4 138 216**

**J. Pharm. Sci., Vol. 55, No.1, pp.57-59**

**The file contains technical information submitted after the application was filed and not included in this specification**

(73) Proprietor: **EKIKA CARBON DIOXIDE CO. LTD.**, 20-8 Shimo 5-chome, Kita- ku Tokyo (JP)

(72) Inventor: **Hamano, Masanori, 3394- 7 Nishikata, Koshigaya- shi Saitama- ken (JP)**
Inventor: **Takeuchi, Siro, 3-16- 4 Mochida, Gyoda-shi Saitama- ken (JP)**
Inventor: **Inoue, Ichiro, 7794- 13 Hino, Hino- shi Tokyo (JP)**

(74) Representative: **Woods, Geoffrey Corlett, J.A. KEMP & CO. 14 South Square Gray's Inn, London WC1R 5EU (GB)**

EP 0 060 723 B2

## Description

This invention relates to an indicator which can be used to estimate with the naked eye an amount of gaseous ethylene oxide (hereinafter referred to as "EOG"), for example remaining in medical instruments or sanitary goods sterilized with EOG, by the colour or the colour-change of the indicator.

Sterilization of medical instruments or sanitary goods can be carried out by EOG alone, a mixture of EOG and chlorofluorohydrocarbon, or a mixture of EOG and carbon dioxide ($CO_2$). However, since toxicity of EOG is fairly high, sterilization with EOG is frequently accompanied by various harmful influences, for instance chemical burns, injuries of the skin and mucous membranes and hemolysis, which have attracted world-wide attention. The Food and Drug Administration (FDA) of the United States of America regulates the acceptable concentration of residual EOG in articles sterilised using EOG to less than 25 ppm in articles which are to be embedded in living bodies, and to less than 250 ppm in articles which are to contact the outside of living bodies.

Gas chromatography and colorimetric analysis are used at present for quantitative analysis of the residual EOG. Both methods require expensive apparatus for analysis and skilled technicians for manipulating the apparatus. In addition, it takes a considerable amount of time to obtain the analytical results. Consequently, at present the amount of residual EOG in sterilized objects is only estimated while referring to data obtained by organizations specialising in analysis or published in scientific or medical literature.

However, between these cases and cases in practice, there exist many differences regarding sterilization conditions, the materials from which the articles sterilized are made and the conditions under which the articles are packed. Consequently, the ways in which EOG is released are different. Accordingly, it is quite inaccurate to judge the amount of residual EOG on the basis of these data.

GB-A-1 523 227 discloses a method for monitoring a sterilization and aeration process employing EOG, as the sterilant, in the presence of a controlled humid atmosphere and temperature, comprising:

a) exposing goods to be sterilised and a single indicator to the sterilant until the indicator undergoes a colour change;

b) placing the sterilised goods to be aerated and the indicator in an aeration chamber until the indicator undergoes another colour change.

An indicating composition comprising 4-(4-nitrobenzyl)-pyridine, polyethylene glycol, thiourea and water may be used in this method.

There is a strong demand amongst manufacturers of medical instruments and suppliers to hospitals for a method and apparatus for estimating instantly and easily the amount of residual EOG in the sterilized articles. However, such a requirement has not been met hitherto.

The present invention provides an indicator based on the 4-(4-nitrobenzyl)-pyridine colorimetric reaction, suitable for detecting ethylene oxide remaining in medical instruments or sanitary goods sterilised with ethylene oxide, which indicator comprises a substrate and an envelope completely enclosing said substrate; characterised in, that, to enable the estimation of the concentration of the remaining ethylene oxide consisting only the substrate is obtained by drying a sheet of paper impregnated with a solution consisting only of 4-(4-nitrobenzyl)pyridine at a concentration of 0.5 to 5 % by weight in an organic solvent and the envelope is made of a heat-sealable plastics film of a single layer type or composite layer type and having a low permeability to gaseous ethylene oxide and a permeability to $CO_2$ of not more than 12.2 ml/cm2/mm/24 h (200 ml/100 · inch²/mil/24 h) at 25°C under atmospheric pressure and 50 % R.H. measured according to ASTM D 1434-63, at least a part of which envelope being transparent to enable observation of the colour of the substrate.

It is thus possible to provide an indicator by which the amount of residual EOG can be estimated with the naked eye. Therefore the present invention also provides use of an indicator of the invention for estimating the concentration of ethylene oxide remaining in medical instruments or sanitary goods sterilised with ethylene oxide.

The invention will now be described by way of example with reference to the accompanying drawings, in which:

Fig. 1 is a plan view of an indicator of the invention;
Fig. 2 is a cross-sectional view of a flake-like indicator of the invention;
Fig. 3 is a cross-sectional view of an another flake-like indicator of the invention;
Fig. 4 is a cross-sectional view of a still another indicator of the invention;
Fig. 5 is a cross-sectional view of a tablet-like indicator of the invention; and
Fig. 6 is a diagram illustrating the relationship between the concentration of residual EOG and the course of release of EOG from," sterilized materials at 25°C with the colour change of the indicator.

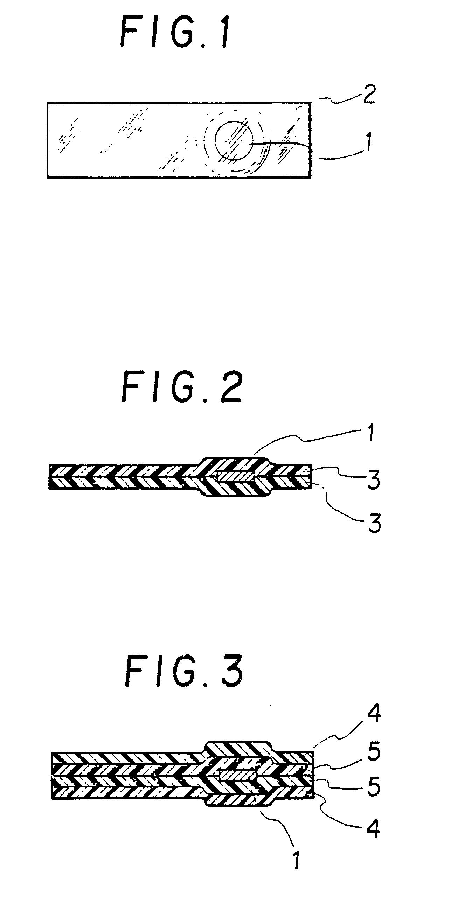

Referring to Figures 1 to 5, the substrate 1 of the indicator of the invention is a sheet of paper impregnated with a solution of NBP at a concentration of 0.5 to 5 % by weight, preferably 2 to 3 % by weight, in an organic solvent such as ethanol, isopropyl alcohol, ethyl acetate, acetone or methyl ethyl ketone, and thereafter dried. The paper is selected from materials easily impregnated with the solution and is preferably synthetic paper, blotting paper or filter paper.

EP 0 060 723 B2

The envelope 2 which encloses the substrate 1 is at least partially transparent so that the colour-change of the substrate 1 can be observed by the naked eye. The permeability of the envelope to EOG should be substantially low. The permeability of the envelope to $CO_2$ is not more than 12.2 ml/cm²/mm/24 h (200 ml/100 · inch²mil/24 h) at 25°c under the atmospheric pressure and 50 % R.H. measured according to ASTM D 1434-63.

It is unnecessary for the envelope 2 to adhere closely to the substrate 1. It is required that the envelope 2 completely encloses the substrate 1 to prevent the invasion of air from outside. For example, the indicator of the invention can take the form of a sealed pouch.

A transparent and heat-sealable plastics film may be used as the material for the envelope 2. Such a film may be a single-layer film 3 (as in Fig. 2) or may be a composite film 4, 5 (as in Fig. 3). A polyvinyl alcohol film or a nylon film is preferably utilized if a single-layer film is used, with a preferable thickness of 5 to 40 μm. A composite film for use as the envelope 2 comprises an outer layer 4 having low permeability to EOG and an inner layer having high permeability to EOG and heat-sealability. As the material for the outer layer 4, a polyester, nylon, polyvinyl alcohol, polyvinylidene chloride, polyvinyl fluoride or cellophane is preferable with the preferable thickness of 5 to 40 μm. As the material for the inner layers, polyethylene or polypropylene is preferable. The inner layer may be even a little thicker than the outer layer.

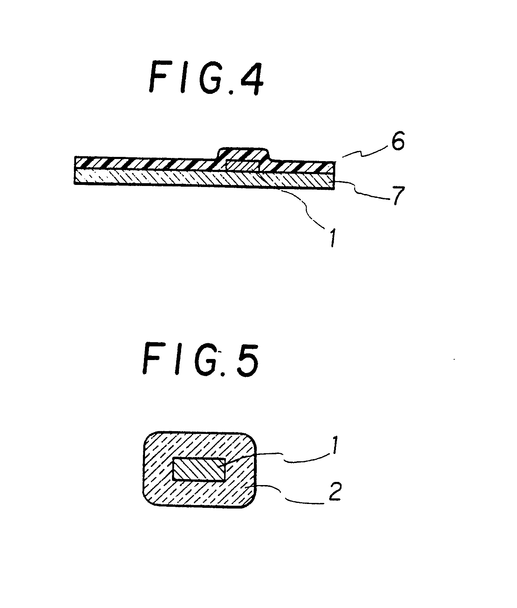

A composite material as shown in Fig. 4 may be used as an envelope. This is manufactured by adhering a plastics film 6 having low permeability to EOG onto a base plate 7 such as a metal foil, for example aluminum foil, which is impermeable to EOG. The substrate 1 is sandwiched between the plastics film 6 and the base plate 7. The plastics film 6 contacts one side of the substrate 1, and the base plate 7 contacts the other side of the substrate 1. Naturally, in this case, as the plastics film 6, either a single-layer film or a composite film may be utilized.

The form of the indicator for detecting residual EOG of the invention may be flake-like (strip-like) as shown in Figs. 1 to 4, or tablet-like as shown in Fig. 5. The envelope of the tablet-like indicator may be a single-layer or a composite film.

The colour of the indicator of the invention changes step-wise as follows:

light blu → blu → dark blue → grey → brown → light brown → yellow

during the course of release of EOG. The time required for each colour to change is the same if the conditions of sterilization and release of EOG are the same.

Accordingly, when the relationship between the amount of residual EOG measured by, for example, gas chromatography and the time required for the indicator of the invention to change colour is established for each medical material sterilized under general sterilization conditions, the amount of residual EOG may be visually estimated by placing the indicator of the invention together with the article to be sterilized. Namely, by using the indicator of the invention, it is possible to judge indirectly whether the concentration of residual EOG in the article is lower than a predetermined value or a regulated value set by the FDA. It is known that the release rate of EOG from a sterilized object is very different depending upon the conditions of sterilization, the materials and the state of the article including its packaging before sterilization and the conditions under which the sterilized article is stored. However, if the conditions of sterilization and the materials of the articles to be sterilized have been predetermined, the amount of residual EOG in the articles after sterilization can be estimated by observing the colour change of the indicator of the invention as is shown in the following Examples.

The following Examples illustrate the invention.

**Example 1**

0.05 ml of a 2 % by weight acetone solution of NBP was added dropwise onto a sheet of filter paper 10 mm in diameter and 0.5 mm thick. After drying the sheet in open air, the dried sheet was packaged by heat-sealing in a composite film (60 x 20 mm) comprising a polyester film (permeability to $CO_2$ of 3.05 ml/cm²/mm/24 h (50 ml/100 · inch²/mil/24 h)) 12 μm thick as the outer layer and a cast polypropylene film 40 μm thick as the inner layer. An indicator of the invention as shown in Fig. 3 was thus prepared.

After introducing the indicator alone into a sterilizer, the indicator was treated with a gaseous mixture consisting of 30 % by volume of EOG and 70 % by volume of $CO_2$ at 50°C, the concentration of EOG being 500 mg/l, for 2 hours. The indicator was then removed from the sterilizer and allowed to stand in a room at 25°C.

At the time when the sterilization of the indicator was over, it was colourless. However, as time passed by, it exhibited the colour changes shown in Table 1:

3

**Table 1**

| Time in days | 0 | 0.25 | 0.5 | 1 | 1.5 | 3 | 7 |
|---|---|---|---|---|---|---|---|
| Colour | - | light blue | blue | dark blue | grey | brown | light brown |
| Letter of Fig. 6 | | a | b | c | d | e | f |

**Example 2**

An indicator prepared as in Example 1 was packed into a sterilizing package made of a plastics film and a synthetic film together with each of the following materials for medical instruments: polyethylene, polystyrene, polypropylene, polycarbonate, ASS, polyacetal, 6-nylon, 6,6-nylon, plasticized polyvinylchloride, latex-rubber, butadiene-rubber and silicone-rubber. These packages were treated under the same conditions as in Example 1. After sterilization, the packages were removed from the sterilizer and left in a room at 25°C. The concentration of residual EOG in the material was determined by gas chromatography as time passed by, while the colour change of the indicator were observed.

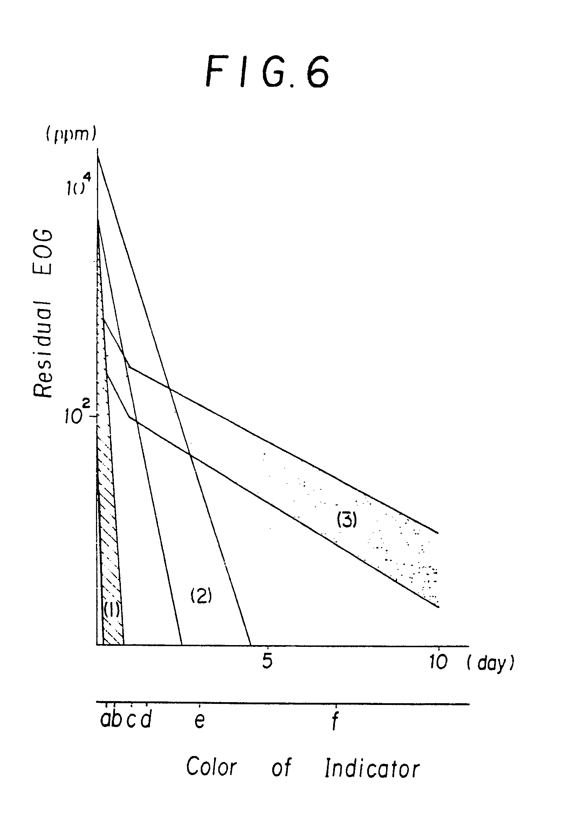

The colour change of the indicator was the same as in Example 1 as shown in Fig. 6, wherein the letters from a to f correspond to each colour from light blue to light brown respectively.

As seen from Fig. 6, the course of release of EOG from the materials was classified in three groups. The first group of latex-rubber, butadiene-rubber and silicone-rubber is shown as (1) in Fig. 6, from which EOG was easily released. The second group of polyethylene and plasticized polyvinylchloride is shown as (2) in Fig. 6, from which EOG was moderately easily released. The third group of 6,6-nylon, 6-nylon, polycarbonate, polystyrene, polypropylene, ABS and polyacetal is shown as (3) in Figure 6, from which EOG was released only slowly.

In the material from which EOG was most difficulty released in each of the three groups, namely butadiene rubber in the first group, polyethylene in the second group and ASS in the third group, the colours of the indicator of the invention corresponding to the upper limit of the residual EOG in the regulated values of the FDA are shown in Table 2.

**Table 2**

| Group | Less than 250 ppm | Less than 25 ppm |
|---|---|---|
| First | light blue | blue |
| Second | grey | brown |
| Third | dark blue | light brown |

**Example 3**

After the same indicator as in Example 1 and each of the same medical materials as in Example 2 were subjected to the same conditions of sterilization, the indicator and the medical materials were transferred into an aerator kept at 50°C with an air ventilation rate of 500 l/min. The colour change of the indicator was observed.

According to the results, the course of release of EOG could be classified into three groups. However, the time required for the concentration of residual EOG to reach the predetermined value was about one fifth of the time in Example 2 with the same pattern of colour-change of the indicator appearing within an equally shortened time.

**Claims**

1. An indicator based on the 4-(4-nitrobenzyl)pyridine colorimetric reaction, suitable for detecting ethylene oxide, remaining in medical instruments or sanitary goods sterilised with ethylene oxide, which indicator comprises a substrate (1) and an envelope (2) completely enclosing said substrate (1); characterised in that, to enable the estimation of the concentration of the remaining ethylene oxide, the substrate (1) is obtained by drying a sheet of a paper impregnated with a solution consisting only of 4-(4-nitrobenzyl)-pyridine at a

concentration of 0.5 to 5 % by weight in an organic solvent and the envelope (2) is made of a heat-sealable plastics film of a single layer type or composite layer type and having a low permeability to gaseous ethylene oxide and a permeability to $CO_2$ of not more than 12.2 ml/cm$^2$/mm/24 h (200 ml/100 · inch$^2$/mil/24 h) at 25°C under atmospheric pressure and 50 % R.H. measured according to ASTM D 1434-63, at least a part of which envelope (2) being transparent to enable observation of the colour of the substrate (1).

2. An indicator according to claim 1, in which the plastics film is transparent.

3. An indicator according to claim 2, in which the film is a single layer (3) and is made of polyvinyl alcohol or nylon.

4. An indicator according to claim 2, in which the film is a composite film comprising an outer layer (4) laving low permeability to gaseous ethylene oxide and an inner layer (5) having heat-sealability and high permeability to gaseous ethylene oxide.

5. An indicator according to claim 4, in which the outer layer (4) is made of polyester, nylon, polyvinyl alcohol, polyvinylidene chloride, polyvinyl fluoride or cellophane.

6. An indicator according to claim 4 or 5, in which the inner layer (5) is made of polyethylene or polypropylene.

7. An indicator according to claim 1, in which the envelope (2) comprises a base plate made of a metal foil (7) and a plastics film (6) having low permeability to gaseous ethylene oxide, the impregnated substrate (1) being enclosed therebetween.

8. An indicator according to any one of the preceding claims, in which the substrate (1) is a sheet of synthetic paper, blotting paper or filter paper.

9. An indicator according to any one of the preceding claims, which is in the form of a strip or tablet.

10. Use of an indicator as claimed in any one of the preceding claims for estimating the concentration of ethylene oxide remaining in medical instruments or sanitary goods sterilised with ethylene oxide.

**Patentansprüche**

1. Ein auf der Colorimetrischen Reaktion von 4-(4-Nitrobenzyl)-pyridin basierender Indikator, der sich zum Nachweis von in mit Ethylenoxid sterilisierten medizinischen Instrumenten oder hygienischen Produkten verbliebenem Ethylenoxid eignet und ein Substrat (1) und eine dieses Substrat (1) vollständig umschließende Umhüllung aufweist, dadurch gekennzeichnet, daß das Substrat (1), um die Abschätzung der Konzentration des verbliebenen Ethylenoxids zu ermöglichen, erhalten wird, indem ein Stück Papier getrocknet wird, das mit einer nur aus 4-(4-Nitrobenzyl)-pyridin bestehenden Lösung mit einer Konzentration von 0,5 bis 5 Gew.-% in einem organischen Lösungsmittel imprägniert worden ist, und die Umhüllung (2) aus einer heißsiegelbaren Kunststoffolie eines Einschichttyps oder Verbundfolientyps hergestellt ist und eine geringe Durchlässigkeit für gasförmiges Ethylenoxid und eine Durchlässigkeit für $CO_2$ von nicht mehr als 12,2 ml/cm$^2$/24 h bei 25°C unter Atmosphärendruck und bei 50 relativer Luftfeuchtigkeit gemessen gemäß ASTM D 1434 - 63 aufweist, wobei mindestens ein Teil der Umhüllung (2) transparent ist, um die Beobachtung der Farbe des Substrats (1) zu ermöglichen.

2. Indikator nach Anspruch 1, dadurch gekennzeichnet, daß die Kunststoffolie transparent ist.

3. Indikator nach Anspruch 2, dadurch gekennzeichnet, daß die Folie aus einer Schicht (3) besteht und aus Polyvinylalkohol oder Nylon hergestellt ist.

4. Indikator nach Anspruch 2, dadurch gekennzeichnet, daß die Folie eine Verbundfolie mit einer äußeren Schicht (4) mit geringer Durchlässigkeit für gasförmiges Ethylenoxid und einer heißsiegelbaren inneren Schicht (5) mit großer Durchlässigkeit für gasförmiges Ethylenoxid ist.

5. Indikator nach Anspruch 4, dadurch gekennzeichnet, daß die äußere Schicht (4) aus Polyester, Nylon, Polyvinylalkohol, Polyvinylidenchlorid, Polyvinylfluorid oder Zellophan hergestellt ist.

6. Indikator nach Anspruch 4 oder 5, dadurch gekennzeichnet, daß die innere Schicht (5) aus Polyethylen oder Polypropylen hergestellt ist.

7. Indikator nach Anspruch 1, dadurch gekennzeichnet, daß die Umhüllung (2) eine Basisplatte aus einer Metallfolie (7) und eine Kunststoffolie (6) mit geringer Durchlässigkeit für gasformiges Ethylenoxid aufweist, wobei das imprägnierte Substrat (1) dazwischen eingeschlossen ist.

8. Indikator nach einem der vorangehenden Ansprüche, dadurch gekennzeichnet, daß das Substrat (1) ein Stück synthetisches Papier, Fließpapier oder Filterpapier ist.

9. Indikator nach einem der vorangehenden Ansprüche, dadurch gekennzeichnet, daß er die Form eines Streifens oder einer Tablette besitzt.

10. Verwendung eines Indikators nach einem der vorangehenden Ansprüche zur Abschätzung der Konzentration von Ethylenoxid, das in mit Ethylenoxid sterilisierten medizinischen Instrumenten oder hygienischen Produkten zurückgeblieben ist.

# EP 0 060 723 B2

## Revendications

1. Indicateur basé sur la réaction colorimétrique de la (nitro-4-benzyl)-4 pyridine pour la détection de l'oxyde d'éthylène restant dans des instruments médical ou des articles sanitaires après stérilisation par l'oxyde d'éthylène, ledit indicateur comprenant un substrat et une enveloppe entourant complètement ce substrat caractérisé par le fait que, pour permettre l'estimation de la concentration de l'oxyde d'éthylène restant, le substrat est obtenu en séchant une feuille d'un papier imprégné d'une solution consistant uniquement en (nitro-4-benzyl)-4 pyridine à une concentration de 0,5 à 5 % en poids dans un solvant organique et en ce que l'enveloppe est constituée d'une pellicule en matière plastique thermoscellable du type à une seule couche ou du type à couche multiple et ayant une faible perméabilité à l'oxyde d'éthylène gazeux et une perméabilité au $CO_2$ ne dépassant pas 12,2 ml/cm²/mm/24 heures à 25°C à la pression atmosphérique et 50 % d'H.R. mesurée suivant l'ASTM D-1434-63, au moins une partie de cette enveloppe étant transparente pour permettre l'observation de la couleur du substrat.

2. Indicateur selon la revendication 1, dans lequel la pellicule en matière plastique est transparente.

3. Indicateur selon la revendication 2, dans lequel la pellicule est à une seule couche (3) et est constituée d'alcool polyvinylique ou de nylon.

4. Indicateur selon la revendication 2, dans lequel la pellicule est à couche multiple comprenant une couche externe (4) ayant une faible perméabilité à l'oxyde d'éthylène gazeux et une couche interne (5) thermoscellable de perméabilité élevée à l'oxyde d'éthylène gazeux.

5. Indicateur selon la revendication 4, dans lequel la couche externe (4) est constituée de polyester, de nylon, d'alcool polyvinylique, de chlorure de polyvinylidène, de fluorure de polyvinyle ou de cellophane.

6. Indicateur selon l'une des revendications 4 ou 5, dans lequel la couche interne (5) est constituée de polyéthylène ou de polypropylène.

7. Indicateur selon la revendication 1, dans lequel l'enveloppe (2) comprend une plaque de base constituée d'une feuille métallique (7) et d'une pellicule en matière plastique (6) ayant une faible perméabilité à l'oxyde d'éthylène gazeux, le substrat imprégné (1) étant enfermé entre celles-ci.

8. Indicateur selon l'une quelconque des revendications précédentes, dans lequel le substrat (1) est une feuille de papier synthétique, de papier buvard ou de papier filtre.

9. Indicateur selon l'une quelconque des revendications précédentes qui est sous la forme d'une bande ou d'un comprimé.

10. Utilisation d'un indicateur selon l'une quelconque des revendications précédentes pour déterminer la concentration d'oxyde d'éthylène restant dans les instruments médicaux ou les articles sanitaires stérilisés par l'oxyde d'éthylène.

# F I G . 1

2

1

# F I G . 2

1

3

3

# F I G . 3

4

5

5

4

1

# FIG.4

# FIG.5

# F I G. 6